# EUROPEAN PATENT SPECIFICATION

(11) **EP 4 377 129 B1**
(45) Date of publication and mention of the grant of the patent: **01.01.2025**
(21) Application number: 22843470.0
(22) Date of filing: 23.11.2022
(51) Int. Cl.: B60L 53/10, B60L 53/14, B60L 53/60, B60L 58/12

(54) **CHARGING MANAGEMENT FOR AN AUTONOMOUS ELECTRIC WORK VEHICLES AT A WORKSITE**
LADEMANAGEMENT FÜR EIN AUTONOMES ELEKTRISCHES ARBEITSFAHRZEUG AUF EINER ARBEITSSTELLE
GESTION DE LA CHARGE D'UN VÉHICULE DE TRAVAIL ÉLECTRIQUE AUTONOME SUR UN CHANTIER

(30) Priority: 03.12.2021 GB 202117536
(43) Date of publication of application: 05.06.2024
(73) Proprietor: Caterpillar Inc., Peoria, IL 61629-9510 (US)
(72) Inventor: TWIGGER, Thomas, Leslie, Peoria, Illinois 61629-9510 (US); GAHLINGS, Steven A., Peoria, Illinois 61629-9510 (US)
(74) Representative: Novagraaf Group
(86) International application number: PCT/US2022/050839
(87) International publication number: WO 2023/101875

(56) References cited:
- WO-A1-2021/155345
- CN-A- 110 854 946
- US-A1- 2017 282 736
- US-A1- 2019 202 304
- US-A1- 2019 205 842
- US-A1- 2020 262 307
- US-A1- 2020 376 972
- US-A1- 2021 347 275

## Description

### Field of the disclosure

The disclosure relates to the field of electric work vehicles.

### Background

Large worksites typically have more than one charging point for electric work vehicles. The charging points may be at the same location or at different locations.

An autonomous electric work vehicle may travel to a charging point in order to charge without knowledge of any properties of the charging point, and so risk not being able to charge. For example, the charging point may be in use by another vehicle, low on power or charge, out of order, the wrong type of charging point, or otherwise unusable. In the event that an electric work vehicle cannot charge at the charging point, the electric work vehicle may be required to wait or to travel to a different charging point. Queues may develop, with electric work vehicles unnecessarily idle.

WO 2021/155345 A1 describes a vehicle charging system comprises at least one controller and at least one arm, each arm having a first end coupled an actuator and a second end comprising a charging interface. The actuator is configured to articulate the arm into a charging position. The charging interface comprises at least one charging contact coupled to a power source and configured to engage and deliver power to a vehicle charging interface to charge at least one battery of a vehicle.

CN 110854946 A describes a charging scheduling method and system, electronic device and storage medium. The method includes: receiving the data reported by automated guided vehicles (AGVs) and a charger, wherein the data includes the power information of the AGVs; determining the priorities of charging tasks of the AGVs according to the power information of the AGVs and non-charging tasks assigned to the AGVs, and instructing the respective AGVs to carry out the charging tasks and the non-charging tasks based on the priorities in a descending order.

US 2019/0205842 A1 describes charge scheduling across a fleet of autonomous vehicles. A system includes one or more processors and one or more computer-readable non-transitory storage media coupled to one or more of the processors. The one or more computer-readable non-transitory storage media include instructions operable when executed by one or more of the processors to cause the system to perform operations including receiving service-facility data associated with a service facility that includes one or more service regions for servicing autonomous vehicles. Each of the one or more service regions is configured to charge an autonomous vehicle. The service facility data includes location information indicating a location of each of the one or more service regions; and availability information indicating an availability of each of the one or more service regions. The operations also include receiving vehicle data associated with a number of autonomous vehicles. The vehicle data includes a charge level of a respective autonomous vehicle.

US 2020/376972 A1 describes a mobile direct current fast charger customer-vehicle-station matching system. A system for matching a plurality of electrically powered vehicles to a plurality of available mobile chargers includes a computerized server device programmed to monitor optimization inputs related to the plurality of available mobile chargers, monitor optimization inputs related to the plurality of electrically powered vehicles operated by a plurality of customers, determine a lowest-cost-based ranked listing of matched charger and vehicle pairings for each of the plurality of customers based upon the optimization inputs related to the plurality of available chargers and the optimization inputs related to the plurality of the electrically powered vehicles, present the ranked listing of matched charger and vehicle pairings to each of the customers, monitor selection by each of the plurality of customers of a desired charger for the customer from the ranked listing, and direct each of the plurality of customers to the desired charger for the customer.

US 2019/202304 A1 describes automated vehicle parking and wireless power transfer charging. A static wireless power transfer (WPT) system (with charging spots and non-charging parking spots) receives a request to charge a vehicle. The device schedules a period of time during which the vehicle is allocated access to a particular charging spot based on scheduling characteristics and one or more other vehicles also requesting charging. The device may then send instructions to control the vehicle to autonomously move from a current parking spot to the particular charging spot for the scheduled period of time, the instructions precisely aligning the vehicle in the particular charging spot for optimum power transfer based on a charging coil of the vehicle and a respective ground-based charging coil of the particular charging spot. After the scheduled period of time, the device may send additional instructions to control the vehicle to autonomously move out of the particular charging spot.

US 2020/262307 A1 describes an electric vehicle charging scheduler. A vehicle includes one or more controllers, programmed to responsive to receiving an indication of a destination, select a charger within a predefined geofence from the destination; responsive to detecting the vehicle becoming less than a predefined distance from the charger, calculate a proposed charging schedule based on a current state-of-charge (SOC) and a desired SOC; and join a queue for the charger with the proposed charging schedule.

US 2017/282736 A1 describes a system for managing a group of charging stations for a personal mobility device and includes a central personal mobility device charger controller for controlling system operations. A first interface enables communication between the central personal mobility device charge controller and a plurality of charging units for charging the personal mobility device. A second interface enables communications between the central personal mobility device charge controller and a plurality of charging applications enabling finding of locations of at least one of the plurality of charging units and making of reservations with the at least one of the plurality of charging units. A reservation controller stored on the central personal mobility device charger controller enables a user of one of the plurality of charging applications to select the at least one of the plurality of charging units and make a reservation with the at least one of the plurality of charging units at a selected time period.

US 2021/347275 A1 describes a system and method for a battery on wheels for charging mobile battery-operated units. The method can include determining charge levels, current positions, and transport speeds for an electric vehicle (EV), identifying one or more EVs in need of charging, and mobilizing a Mobile Charging Station (MoCS) to deliver one or more external batteries. A processor, with a memory including computer program code, can be configured to receive current charge level data for mobile battery-powered entities, identify one or more EVs to be charged and the proximity of both MoCS and physical battery stations, and send charging instructions to the EVs. A routing and charge transaction scheduling algorithm can be used to optimize the route of one or more battery-powered entities and to schedule charge transactions between the EV and MoCS and/or the battery station.

### Summary of the disclosure

A method of charging management for a worksite comprising a plurality of autonomous electric work vehicles is provided. The method comprises communicating charger properties from a plurality of charging modules to a central controller. The method further comprises communicating vehicle properties from a plurality of electric work vehicles to the central controller. The method further comprises scheduling charging for the plurality of electric work vehicles based on the charger properties and the vehicle properties, wherein scheduling charging comprises assigning to each of the electric work vehicles a designated charging time and a designated charging module, wherein the designated charging module is one of the plurality of charging modules. The method further comprises bringing each electric work vehicle and its designated charging module together at designated charging time of the electric work vehicle. The charger properties comprise location of the charging module and availability of the charging module. The vehicle properties comprise a current state of charge of a battery of the electric work vehicle and a capacity of the battery of the electric work vehicle.

A charging management device for a worksite comprising a plurality of autonomous electric work vehicles is provided. The charging management device comprises a central controller. The charging management device is configured to communicate charger properties from a plurality of charging modules to a central controller. The charging management device is further configured to communicate vehicle properties from a plurality of electric work vehicles to the central controller. The charging management device is further configured to schedule charging for the plurality of electric work vehicle based on the charger properties and the vehicle properties, wherein scheduling charging comprises assigning to each of the electric work vehicles a designated charging time and a designated charging module, wherein the designated charging module is one of the plurality of charging modules. The charging management device is further configured to bring each electric work vehicle and its designated charging module together at designated charging time of the electric work vehicle. The charger properties comprise location of the charging module and availability of the charging module. The vehicle properties comprise a current state of charge of a battery of the electric work vehicle and a capacity of the battery of the electric work vehicle.

In this way, efficient charging of autonomous electric work vehicles may be scheduled. The example, queues for charging may be limited, and electric work vehicles may be prevented from travelling needlessly far to a charging module or to a charging module that is low on power or experiencing issues.

### Brief description of the drawings

A specific embodiment of the disclosure will now be described, by way of example only, with reference to the accompanying drawings in which:

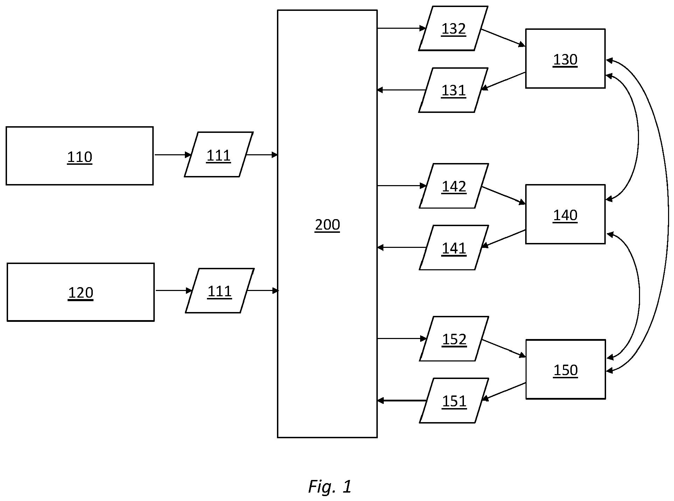

Figure 1 shows a schematic diagram illustrating communication between a charging module and three electric work vehicles via a central controller, and negotiation between the electric work vehicles in accordance with an embodiment of the present disclosure.

### Detailed description

With reference to Figure 1, a method of charging management for a worksite comprising a plurality of autonomous electric work vehicles 130, 140, 150 is illustrated. The method is illustrated with three electric work vehicles 130, 140, 150 and two charging modules 110, 120 as an example, but the worksite could comprise two or more than three electric work vehicles, and more than two charging modules. The method comprises communicating charger properties from a plurality of charging modules 110, 120 to a central controller 200. Vehicle properties are communicated from a plurality of electric work vehicles 130, 140, 150 to the central controller. Charging is scheduled for the plurality of electric work vehicles 130, 140, 150 based on the charger properties and the vehicle properties. Scheduling charging comprises assigning to each of the electric work vehicles 130, 140, 150 a designated charging time and a designated charging module, wherein the designated charging module is one of the plurality of charging modules 110, 120.

Each electric work vehicle and its designated charging module are brought together at the designated charging time of the electric work vehicle.

The charger properties comprise a location of the charging module and availability of the charging module. The vehicle properties comprise a current state of charge of a battery of the electric work vehicle and a capacity of the battery of the electric work vehicle.

A schedule 132, 142, 152 comprising the designated charging time and designated charging module for each electric work vehicle 130, 140, 150 may be communicated to each electric work vehicle 130, 140, 150 from the central controller 200.

Scheduling charging may be based on one or more of a priority assigned to each electric work vehicle; a state of charge of the battery of each electric work vehicle; a duration of charging required for each electric work vehicle; a proximity of each electric work vehicle to the charging module; and an available amount of power of the charging module. In this way, the schedule can ensure that electric work vehicles do fall below a threshold state of charge. The schedule can also organise charging efficiently. For example, in an event that a vehicle is close to a charging module it may be efficient to charge the vehicle even if its state of charge of the battery is relatively high, so that it will not need to travel back to the charging module when it is further away, wasting time and charge.

Communicating charger properties to the electric work vehicle and communicating vehicle properties to the charging module may occur at the same time, or sequentially in either order. The charger properties and vehicle properties may be communicated continuously or at regular intervals. The charger properties and vehicle properties may alternatively be communicated on demand, for example in response to a request by a remote operator or a separate controller. The charger properties and vehicle properties may be communicated directly between the charging module and the electric work vehicle in addition to via a central controller 200.

The charging module and the electric work vehicle may each comprise a telematics module. The telematics modules may be configured to send and receive the charger properties and the vehicle properties.

The charging module may comprise a mains supply, or may not be connected to the mains supply. The charging module may comprise a power pack. The charger may comprise a generator.

Scheduling charging may be based on at least one of a priority assigned to each electric work vehicle; a state of charge of the battery of each electric work vehicle; a duration of charging required for each electric work vehicle; a proximity of each electric work vehicle to the charging module; and an available amount of charge of the charging module. Charging is more time consuming than charging a diesel electric work vehicle, for example, and so scheduling charging can take into account the expected duration of charging to avoid queues building up.

The charger properties may further comprise a health status of the charger. For example, whether the charger is working, and whether there is any damage to the charger or limited capability of the charger. The charger properties may further comprise a charging capacity of the charger. For example, in the event that the charger is not connected to the mains supply, it may have a limited amount of charge available. The charging capacity may comprise a state of charge of power pack. In an embodiment, the charging capacity may comprise either an indication that the charger has sufficient charge to fully charge the battery, or an indication of the predicted state of charge of the battery after fully draining the charger. The charger properties may further comprise a charging rate of the charger, and a charger connection type (such as DC, AC, or three phase).

The charger properties comprise an availability of the charging module. The availability of the charging module may comprise an indication of whether the charger is in use and a reservation status of the charger. For example, the charger may be currently in use, currently free, reserved for use at a certain time by another vehicle, or unreserved. In an event that the charger is in use, the availability of the charging module may further comprise a predicted charging end time at which the charger will be available. Similarly, in an event that the charger is reserved, the availability of the charging module may further comprise a period when the charger is free prior to the reservation and/or a predicted end time of the reservation.

The predicted charging end time may be calculated by the central controller based on a current state of charge of the battery being charged, a target state of charge of the battery being charged, and a charging rate of the charger. In an event that the charger is not connected to the mains supply, the charger properties may further comprise a predicted state of charge of the charger at the predicted charging end time.

In an embodiment, the charger may comprise a DC charger and the charger properties may further comprise a DC voltage of the charger.

The vehicle properties may further comprise a predicted time before charging is required. The predicted time may be based on at least one of a current state of charge, a discharge rate, and a distance from the charger. The discharge rate may be based on a current discharge rate. The discharge rate may be based on data from previous discharging of the battery, for example data comprising discharge rates at different states of charge, or discharge rates for the operator, or discharge rates for performing various tasks with the vehicle. The distance from the charger may be used to calculate the state of charge required to travel to the charger, and therefore the minimum state of charge that the vehicle can reach before needing to travel to the charger.

The vehicle properties may further comprise an available time period for charging. The available time may be based on a return-to-work time for the electric work vehicle. For example, the electric work vehicle may have a scheduled job before which it needs to be charged.

The vehicle properties may further comprise a target state of charge for charging. For example, the target state of charge may be to fully charge the battery to a 100% state of charge. The target state of charge may comprise a state of charge that has been determined to be appropriate to maintain good battery health. The target state of charge may be the state of charge required to complete the next task or the next shift.

The vehicle properties may further comprise at least one of a battery voltage, a maximum charge rate of the battery, a state of health of the battery, and a temperature of the battery.

The charging module may comprise a geofence. The geofence may define a perimeter around the charging module, for example based on a radius from the charging module. Within the geofence, a speed of the electric work vehicle may be limited to below a threshold speed, and/or the electric work vehicle may be limited in the tasks it can perform.

There may be other limitations, such as the number of electric work vehicles permitted to be within the geofence at any one time The charger properties may further comprise the geofence and any limitations on the electric work vehicle that occur within the geofence.

In an embodiment, the step of bringing each electric work vehicle and its designated charging module together may comprise directing each electric work vehicle to its designated charging module. In another embodiment, the step of bringing each electric work vehicle and its designated charging module together may comprise directing the designated charging module to the electric work vehicle.

According to an embodiment of the present disclosure, a charging management device for a worksite comprising a plurality of autonomous electric work vehicles comprises a central controller. The charging management device is configured to communicate charger properties from a plurality of charging modules to a central controller and communicate vehicle properties from a plurality of electric work vehicles to the central controller. The charging management device is further configured to schedule charging for the plurality of electric work vehicle based on the charger properties and the vehicle properties. Scheduling charging comprises assigning to each of the electric work vehicles a designated charging time and a designated charging module, wherein the designated charging module is one of the plurality of charging modules. The charging management device is further configured to bring each electric work vehicle and its designated charging module together at designated charging time of the electric work vehicle. The charger properties comprise a location of the charging module and an availability of the charging module. The vehicle properties comprise a current state of charge of a battery of the electric work vehicle and a capacity of the battery of the electric work vehicle.

The charging management device may be configured to carry out any of the methods described above. The charging management device may comprise a telematics device on the charging module, and a telematics device on the electric work vehicle.

## Claims

1. A method of charging management for a worksite comprising a plurality of autonomous electric work vehicles (130, 140, 150), the method comprising:
communicating charger properties from a plurality of charging modules (110, 120) to a central controller (200);
communicating vehicle properties from a plurality of electric work vehicles (130, 140, 150) to the central controller (200);
scheduling charging for the plurality of electric work vehicles (130, 140, 150) based on the charger properties and the vehicle properties, wherein
scheduling charging comprises assigning to each of the electric work vehicles (130, 140, 150):
a designated charging time; and
a designated charging module, wherein the designated charging
module is one of the plurality of charging modules (110, 120); and bringing each electric work vehicle and its designated charging module together at the designated charging time of the electric work vehicle;
wherein the charger properties comprise:
a location of the charging module; and
an availability of the charging module; and
wherein the vehicle properties comprise:
a current state of charge of a battery of the electric work vehicle; and
a capacity of the battery of the electric work vehicle; and
**characterised in that** the vehicle properties further comprise:
a predicted time before charging is required, based on a current state of charge and a discharge rate wherein the discharge rate is based on either a current discharge rate or on data from previous discharging of the battery.

2. The method of claim 1 wherein scheduling charging is based on at least one of:
a priority assigned to each electric work vehicle (130, 140, 150);
a state of charge of the battery of each electric work vehicle (130, 140, 150);
a duration of charging required for each electric work vehicle (130, 140, 150);
a proximity of each electric work vehicle (130, 140, 150) to the charging module (110, 120); and
an available amount of power of the charging module (110, 120).

3. The method of claim 1 or 2 wherein the charger properties further comprise at least one of:
a health status of the charger (110, 120);
a charging capacity of the charger (110, 120);
a charging rate; and
a charger connection type.

4. The method of any preceding claim wherein the availability of the charging module (110, 120) comprises at least one of:
an indication of whether the charging module (110, 120) is in use; and
a reservation status of the charging module (110, 120).

5. The method of any preceding claim, wherein the vehicle properties further comprise at least one of:
a predicted time before charging is required;
an available time period for charging;
a target state of charge of the battery of the electric work vehicle (130, 140, 150).

6. The method of any preceding claim, wherein the vehicle properties further comprise at least one of:
a predicted time before charging is required;
an available time period for charging;
a target state of charge of the battery;
a battery voltage;
a maximum charge rate of the battery;
a state of health of the battery; and
a temperature of the battery.

7. The method of any preceding claim wherein the step of bringing each electric work vehicle (130, 140, 150) and its designated charging module (110, 120) together comprises directing each electric work vehicle (130, 140, 150) to its designated charging module (110, 120).

8. The method of any of claims 1 to 6 wherein the step of bringing each electric work vehicle (130, 140, 150) and its designated charging module (110, 120) together comprises directing the designated charging module (110, 120) to the electric work vehicle (130, 140, 150).

9. The method of any of claims 1 to 6 wherein the step of bringing each electric work vehicle (130, 140, 150) and its designated charging module (110, 120) together comprises a decision between directing each electric work vehicle (130, 140, 150) to its designated charging module (110, 120) and directing the designated charging module (110, 120) to the electric work vehicle (130, 140, 150).

10. A charging management device for a worksite comprising a plurality of autonomous electric work vehicles (130, 140, 150), the charging management device comprising a central controller (200), wherein the charging management device is configured to:
communicate charger properties from a plurality of charging modules (110, 120) to a central controller (200);
communicate vehicle properties from a plurality of electric work vehicles (130, 140, 150) to the central controller;
schedule charging for the plurality of electric work vehicles (130, 140, 150) based on the charger properties and the vehicle properties, wherein
scheduling charging comprises assigning to each of the electric work vehicles:
a designated charging time; and
a designated charging module, wherein the designated charging
module is one of the plurality of charging modules (110, 120); and bring each electric work vehicle and its designated charging module together at the designated charging time of the electric work vehicle;
wherein the charger properties comprise:
a location of the charging module; and
an availability of the charging module; and
wherein the vehicle properties comprise:
a current state of charge of a battery of the electric work vehicle; and
a capacity of the battery of the electric work vehicle; and
**characterised in that** the vehicle properties further comprise:
a predicted time before charging is required, based on a current state of charge and a discharge rate wherein the discharge rate is based on either a current discharge rate or on data from previous discharging of the battery.

11. The charging management device of claim 10 wherein scheduling charging is based on at least one of:
a priority assigned to each electric work vehicle (130, 140, 150);
a state of charge of the battery of each electric work vehicle (130, 140, 150);
a duration of charging required for each electric work vehicle (130, 140, 150);
a proximity of each electric work vehicle to the charging module (110, 120); and
an available amount of power of the charging module (110, 120).

12. The charging management device of claim 10 or 11 wherein the charger properties further comprise at least one of:
A health status of the charger (110, 120);
a charging capacity of the charger (110, 120);
a charging rate; and
a charger connection type.

13. The charging management device of any of claims 10 to 12 wherein the availability of the charging module (110, 120) comprises at least one of:
an indication of whether the charging module (110, 120) is in use; and
a reservation status of the charging module (110, 120).

14. The charging management device of any of claims 10 to 13, wherein the vehicle properties further comprise at least one of:
a predicted time before charging is required;
an available time period for charging;
a target state of charge of the battery of the electric work vehicle (130, 140, 150).

15. The charging management device of any of claims 10 to 14, wherein the vehicle properties further comprise at least one of:
a predicted time before charging is required;
an available time period for charging;
a target state of charge of the battery;
a battery voltage;
a maximum charge rate of the battery;
a state of health of the battery; and
a temperature of the battery.

## Patentansprüche

1. Verfahren für Lademanagement für eine Arbeitsstätte, umfassend eine Vielzahl von autonomen Elektro-Arbeitsfahrzeugen (130, 140, 150), das Verfahren umfassend:
Übermitteln von Ladegeräteigenschaften von einer Vielzahl von Lademodulen (110, 120) an eine zentrale Steuereinrichtung (200);
Übermitteln von Fahrzeugeigenschaften von einer Vielzahl von Elektro-Arbeitsfahrzeugen (130, 140, 150) an die zentrale Steuereinrichtung (200);
Planen eines Ladens für die Vielzahl von Elektro-Arbeitsfahrzeugen (130, 140, 150) basierend auf den Ladegeräteigenschaften und den Fahrzeugeigenschaften, wobei das Planen des Ladens ein Zuweisen an jedes der Elektro-Arbeitsfahrzeuge (130, 140, 150) umfasst von:
einer festgelegten Ladezeit; und
einem festgelegten Lademodul, wobei das festgelegte Lademodul eines der Vielzahl von Lademodulen (110, 120) ist; und
Zusammenbringen jedes Elektro-Arbeitsfahrzeugs und seines festgelegten Lademoduls zu der festgelegten Ladezeit des Elektro-Arbeitsfahrzeugs;
wobei die Ladegeräteigenschaften umfassen:
einen Standort des Lademoduls; und
eine Verfügbarkeit des Lademoduls; und
wobei die Fahrzeugeigenschaften umfassen:
einen aktuellen Ladezustand einer Batterie des Elektro-Arbeitsfahrzeugs; und
eine Kapazität der Batterie des Elektro-Arbeitsfahrzeugs; und
**dadurch gekennzeichnet, dass** die Fahrzeugeigenschaften ferner umfassen:
eine vorhergesagte Zeit, bevor Laden erforderlich ist, basierend auf einem aktuellen Ladezustand und einer Entladerate, wobei die Entladerate entweder auf einer aktuellen Entladerate oder auf Daten aus vorheriger Entladung der Batterie basiert.

2. Verfahren nach Anspruch 1, wobei das Planen des Ladens auf mindestens einem basiert von:
einer Priorität, die jedem Elektro-Arbeitsfahrzeug (130, 140, 150) zugewiesen ist;
einem Ladezustand der Batterie jedes Elektro-Arbeitsfahrzeugs (130, 140, 150);
einer Ladedauer, die für jedes Elektro-Arbeitsfahrzeug (130, 140, 150) erforderlich ist;
einer Nähe jedes Elektro-Arbeitsfahrzeugs (130, 140, 150) zu dem Lademodul (110, 120); und
einer verfügbaren Leistungsmenge des Lademoduls (110, 120).

3. Verfahren nach Anspruch 1 oder 2, wobei die Ladegeräteigenschaften ferner mindestens eines umfassen von:
einem Gesundheitsstatus des Ladegeräts (110, 120);
einer Ladekapazität des Ladegeräts (110, 120);
einer Laderate; und
einer Ladegerät-Anschlussart.

4. Verfahren nach einem der vorstehenden Ansprüche, wobei die Verfügbarkeit des Lademoduls (110, 120) mindestens eines umfasst von:
einer Angabe, ob das Lademodul (110, 120) in Verwendung ist; und
einem Reservierungsstatus des Lademoduls (110, 120).

5. Verfahren nach einem der vorstehenden Ansprüche, wobei die Fahrzeugeigenschaften ferner mindestens eines umfassen von:
einer vorhergesagten Zeit, bevor Laden erforderlich ist;
einem verfügbaren Zeitraum zum Laden;
einem Ziel-Ladezustand der Batterie des Elektro-Arbeitsfahrzeugs (130, 140, 150).

6. Verfahren nach einem der vorstehenden Ansprüche, wobei die Fahrzeugeigenschaften ferner mindestens eines umfassen von:
einer vorhergesagten Zeit, bevor Laden erforderlich ist;
einem verfügbaren Zeitraum zum Laden;
einem Ziel-Ladezustand der Batterie;
einer Batteriespannung;
einer maximalen Laderate der Batterie;
einem Gesundheitszustand der Batterie; und
einer Temperatur der Batterie.

7. Verfahren nach einem der vorstehenden Ansprüche, wobei der Schritt des Zusammenbringens jedes Elektro-Arbeitsfahrzeugs (130, 140, 150) und seines festgelegten Lademoduls (110, 120) ein Führen jedes Elektro-Arbeitsfahrzeugs (130, 140, 150) zu seinem festgelegten Lademodul (110, 120) umfasst.

8. Verfahren nach einem der Ansprüche 1 bis 6, wobei der Schritt des Zusammenbringens jedes Elektro-Arbeitsfahrzeugs (130, 140, 150) und seines festgelegten Lademoduls (110, 120) das Führen des festgelegten Lademoduls (110, 120) zu dem Elektro-Arbeitsfahrzeug (130, 140, 150) umfasst.

9. Verfahren nach einem der Ansprüche 1 bis 6, wobei der Schritt des Zusammenbringens jedes Elektro-Arbeitsfahrzeugs (130, 140, 150) und seines festgelegten Lademoduls (110, 120) eine Entscheidung zwischen dem Führen jedes Elektro-Arbeitsfahrzeugs (130, 140, 150) zu seinem festgelegten Lademodul (110, 120) und dem Führen des festgelegten Lademoduls (110, 120) zu dem Elektro-Arbeitsfahrzeug (130, 140, 150) umfasst.

10. Lademanagementvorrichtung für eine Arbeitsstätte, umfassend eine Vielzahl von autonomen Elektro-Arbeitsfahrzeugen (130, 140, 150), die Lademanagementvorrichtung umfassend eine zentrale Steuereinrichtung (200), wobei die Lademanagementvorrichtung konfiguriert ist zum:
Übermitteln von Ladegeräteigenschaften von einer Vielzahl von Lademodulen (110, 120) an eine zentrale Steuereinrichtung (200);
Übermitteln von Fahrzeugeigenschaften von einer Vielzahl von Elektro-Arbeitsfahrzeugen (130, 140, 150) an die zentrale Steuereinrichtung;
Planen des Ladens für die Vielzahl von Elektro-Arbeitsfahrzeugen (130, 140, 150) basierend auf den Ladegeräteigenschaften und den Fahrzeugeigenschaften, wobei das Planen des Ladens das Zuweisen an jedes der Elektro-Arbeitsfahrzeuge umfasst von:
einer festgelegten Ladezeit; und
einem festgelegten Lademodul, wobei das festgelegte Lademodul eines der Vielzahl von Lademodulen (110, 120) ist; und
Zusammenbringen jedes Elektro-Arbeitsfahrzeugs und seines festgelegten Lademoduls zu der festgelegten Ladezeit des Elektro-Arbeitsfahrzeugs;
wobei die Ladegeräteigenschaften umfassen:
einen Standort des Lademoduls; und
eine Verfügbarkeit des Lademoduls; und
wobei die Fahrzeugeigenschaften umfassen:
einen aktuellen Ladezustand einer Batterie des Elektro-Arbeitsfahrzeugs; und
eine Kapazität der Batterie des Elektro-Arbeitsfahrzeugs; und
**dadurch gekennzeichnet, dass** die Fahrzeugeigenschaften ferner umfassen:
eine vorhergesagte Zeit, bevor Laden erforderlich ist, basierend auf einem aktuellen Ladezustand und einer Entladerate, wobei die Entladerate entweder auf einer aktuellen Entladerate oder auf Daten aus vorheriger Entladung der Batterie basiert.

11. Lademanagementvorrichtung nach Anspruch 10, wobei das Planen des Ladens auf mindestens einem basiert von:
einer Priorität, die jedem Elektro-Arbeitsfahrzeug (130, 140, 150) zugewiesen ist;
einem Ladezustand der Batterie jedes Elektro-Arbeitsfahrzeugs (130, 140, 150);
einer Ladedauer, die für jedes Elektro-Arbeitsfahrzeug (130, 140, 150) erforderlich ist;
einer Nähe jedes Elektro-Arbeitsfahrzeugs zu dem Lademodul (110, 120); und
einer verfügbaren Leistungsmenge des Lademoduls (110, 120).

12. Lademanagementvorrichtung nach Anspruch 10 oder 11, wobei die Ladegeräteigenschaften ferner mindestens eines umfassen von:
Einem Gesundheitsstatus des Ladegeräts (110, 120);
einer Ladekapazität des Ladegeräts (110, 120);
einer Laderate; und
einer Ladegerät-Anschlussart.

13. Lademanagementvorrichtung nach einem der Ansprüche 10 bis 12, wobei die Verfügbarkeit des Lademoduls (110, 120) mindestens eines umfasst von:
einer Angabe, ob das Lademodul (110, 120) in Verwendung ist; und
einen Reservierungsstatus des Lademoduls (110, 120).

14. Lademanagementvorrichtung nach einem der Ansprüche 10 bis 13, wobei die Fahrzeugeigenschaften ferner mindestens eines umfassen von:
einer vorhergesagten Zeit, bevor Laden erforderlich ist;
einem verfügbaren Zeitraum zum Laden;
einem Ziel-Ladezustand der Batterie des Elektro-Arbeitsfahrzeugs (130, 140, 150).

15. Lademanagementvorrichtung nach einem der Ansprüche 10 bis 14, wobei die Fahrzeugeigenschaften ferner mindestens eines umfassen von:
einer vorhergesagten Zeit, bevor Laden erforderlich ist;
einem verfügbaren Zeitraum zum Laden;
einem Ziel-Ladezustand der Batterie;
einer Batteriespannung;
einer maximalen Laderate der Batterie;
einem Gesundheitszustand der Batterie; und
einer Temperatur der Batterie.

## Revendications

1. Procédé de gestion de charge pour un chantier comprenant une pluralité de véhicules de travail électriques (130, 140, 150) autonomes, le procédé comprenant :
la communication de propriétés de chargeur à partir d'une pluralité de modules de charge (110, 120) à un dispositif de commande central (200) ;
la communication de propriétés de véhicule à partir d'une pluralité de véhicules de travail électriques (130, 140, 150) au dispositif de commande central (200) ;
la programmation d'une charge pour la pluralité de véhicules de travail électriques (130, 140, 150) sur la base des propriétés de chargeur et des propriétés de véhicule, dans lequel la programmation de la charge comprend l'attribution à chacun des véhicules de travail électriques (130, 140, 150) :
d'un moment de charge désigné ; et
d'un module de charge désigné, dans lequel le module de charge désigné est l'un de la pluralité de modules de charge (110, 120) ; et
le regroupement de chaque véhicule de travail électrique et de son module de charge désigné au moment de charge désigné du véhicule de travail électrique ;
dans lequel les propriétés de chargeur comprennent :
une position du module de charge ; et
une disponibilité du module de charge ; et
dans lequel les propriétés de véhicule comprennent :
un état de charge actuel d'une batterie du véhicule de travail électrique ; et
une capacité de la batterie du véhicule de travail électrique ; et
**caractérisé en ce que** les propriétés de véhicule comprennent en outre :
un moment prédit avant que la charge ne soit requise, sur la base de l'état de charge actuel et d'un régime de décharge, dans lequel le régime de décharge est basé soit sur un régime de décharge actuel, soit sur des données à partir d'une décharge précédente de la batterie.

2. Procédé selon la revendication 1, dans lequel la programmation de la charge est basée sur au moins l'un parmi :
une priorité attribuée à chaque véhicule de travail électrique (130, 140, 150) ;
un état de charge de la batterie de chaque véhicule de travail électrique (130, 140, 150) ;
une durée de charge requise pour chaque véhicule de travail électrique (130, 140, 150) ;
une proximité de chaque véhicule de travail électrique (130, 140, 150) par rapport au module de charge (110, 120) ; et
une quantité d'énergie disponible du module de charge (110, 120).

3. Procédé selon la revendication 1 ou 2, dans lequel les propriétés de chargeur comprennent en outre au moins l'un parmi :
un état de santé du chargeur (110, 120) ;
une capacité de charge du chargeur (110, 120) ;
un régime de charge ; et
un type de connexion de chargeur.

4. Procédé selon l'une quelconque revendication précédente, dans lequel la disponibilité du module de charge (110, 120) comprend au moins l'un parmi :
une indication du fait de savoir si le module de charge (110, 120) est en cours d'utilisation ; et
un état de réservation du module de charge (110, 120).

5. Procédé selon l'une quelconque revendication précédente, dans lequel les propriétés de véhicule comprennent en outre au moins l'un parmi :
un moment prédit avant que la charge ne soit requise ;
une période de temps disponible pour la charge ;
un état de charge cible de la batterie du véhicule de travail électrique (130, 140, 150).

6. Procédé selon l'une quelconque revendication précédente, dans lequel les propriétés de véhicule comprennent en outre au moins l'un parmi :
un moment prédit avant que la charge ne soit requise ;
une période de temps disponible pour la charge ;
un état de charge cible de la batterie ;
une tension de la batterie ;
un régime de charge maximal de la batterie ;
un état de santé de la batterie ; et
une température de la batterie.

7. Procédé selon l'une quelconque revendication précédente, dans lequel l'étape consistant à regrouper chaque véhicule de travail
électrique (130, 140, 150) et son module de charge (110, 120) désigné comprend l'orientation de chaque véhicule de travail électrique (130, 140, 150) vers son module de charge (110, 120) désigné.

8. Procédé selon l'une quelconque des revendications 1 à 6, dans lequel l'étape consistant à regrouper chaque véhicule de travail
électrique (130, 140, 150) et son module de charge (110, 120) désigné comprend l'orientation du module de charge (110, 120) désigné vers le véhicule de travail électrique (130, 140, 150).

9. Procédé selon l'une quelconque des revendications 1 à 6, dans lequel l'étape consistant à regrouper chaque véhicule de travail électrique (130, 140, 150) et son module de charge (110, 120) désigné comprend une décision entre l'orientation de chaque véhicule de travail électrique (130, 140, 150) vers son module de charge (110, 120) désigné et l'orientation du module de charge (110, 120) désigné vers le véhicule de travail électrique (130, 140, 150).

10. Dispositif de gestion de charge pour un chantier comprenant une pluralité de véhicules de travail électriques (130, 140, 150) autonomes, le dispositif de gestion de charge comprenant un dispositif de commande central (200), dans lequel le dispositif de gestion de charge est configuré pour :
communiquer des propriétés de chargeur à partir d'une pluralité de modules de charge (110, 120) à un dispositif de commande central (200) ;
communiquer des propriétés de véhicule à partir d'une pluralité de véhicules de travail électriques (130, 140, 150) au dispositif de commande central ;
programmer la charge pour la pluralité de véhicules de travail électriques (130, 140, 150) sur la base des propriétés de chargeur et des propriétés de véhicule, dans lequel la programmation de la charge comprend l'attribution à chacun des véhicules de travail électriques de :
un moment de charge désigné ; et
un module de charge désigné, dans lequel le module de charge désigné est l'un de la pluralité de modules de charge (110, 120) ; et
regrouper chaque véhicule de travail électrique et son module de charge désigné au moment de charge désigné du véhicule de travail électrique ;
dans lequel les propriétés de chargeur comprennent :
une position du module de charge ; et
une disponibilité du module de charge ; et
dans lequel les propriétés de véhicule comprennent :
un état de charge actuel d'une batterie du véhicule de travail électrique ; et
une capacité de la batterie du véhicule de travail électrique ; et
**caractérisé en ce que** les propriétés de véhicule comprennent en outre :
un moment prédit avant que la charge ne soit requise, sur la base de l'état de charge actuel et d'un régime de décharge, dans lequel le régime de décharge est basé soit sur un régime de décharge actuel, soit sur des données à partir d'une décharge précédente de la batterie.

11. Dispositif de gestion de charge selon la revendication 10, dans lequel la programmation de la charge est basée au moins l'un parmi :
une priorité attribuée à chaque véhicule de travail électrique (130, 140, 150) ;
un état de charge de la batterie de chaque véhicule de travail électrique (130, 140, 150) ;
une durée de charge requise pour chaque véhicule de travail électrique (130, 140, 150) ;
une proximité de chaque véhicule de travail électrique par rapport au module de charge (110, 120) ; et
une quantité d'énergie disponible du module de charge (110, 120).

12. Dispositif de gestion de charge selon la revendication 10 ou 11, dans lequel les propriétés de chargeur comprennent en outre au moins l'un parmi :
un état de santé du chargeur (110, 120) ;
une capacité de charge du chargeur (110, 120) ;
un régime de charge ; et
un type de connexion de chargeur.

13. Dispositif de gestion de charge selon l'une quelconque des revendications 10 à 12, dans lequel la disponibilité du module de charge (110, 120) comprend au moins l'un parmi :
une indication du fait de savoir si le module de charge (110, 120) est en cours d'utilisation ; et
un état de réservation du module de charge (110, 120).

14. Dispositif de gestion de charge selon l'une quelconque des revendications 10 à 13, dans lequel les propriétés de véhicule comprennent en outre au moins l'un parmi :
un moment prédit avant que la charge ne soit requise ;
une période de temps disponible pour la charge ;
un état de charge cible de la batterie du véhicule de travail électrique (130, 140, 150).

15. Dispositif de gestion de charge selon l'une quelconque des revendications 10 à 14, dans lequel les propriétés de véhicule comprennent en outre au moins l'un parmi :
un moment prédit avant que la charge ne soit requise ;
une période de temps disponible pour la charge ;
un état de charge cible de la batterie ;
une tension de la batterie ;
un régime de charge maximal de la batterie ;
un état de santé de la batterie ; et
une température de la batterie.
